# EUROPEAN PATENT APPLICATION

(11) **EP 3 901 240 A1**
(43) Date of publication of application: **27.10.2021**
(21) Application number: 18943760.1
(22) Date of filing: 21.12.2018
(51) Int. Cl.: C12G 3/005, B65D 85/804

(54) **ALCOHOLIC BEVERAGE COMPOUND STORED WITHIN A DISPOSABLE CAPSULE FOR INSTANT PREPARATION**

(71) Applicant: Schatz, Richard Michael, Sandy Hook Newtown, Connecticut 06482 (US); Rossi Tomiazzi, Daniel, 04048-060 Sâo Paulo (BR); Dini, Ana Paula, 09176-090 Santo André (BR)
(72) Inventor: Schatz, Richard Michael, Sandy Hook Newtown, Connecticut 06482 (US); Rossi Tomiazzi, Daniel, 04048-060 Sâo Paulo (BR); Dini, Ana Paula, 09176-090 Santo André (BR)
(74) Representative: Balder IP Law, S.L.
(86) International application number: PCT/BR2018/050478
(87) International publication number: WO 2020/124176

(57) **Abstract**

The present invention patent is drink compound (10) added with alcohol (A1) in form of soluble powder (23a) or liquid (23b), including powdered or liquid ingredients (A2) such as coffee, tea, chocolate, artificial flavors/colorants (21) and other ingredients (22); said alcoholic drink compound (10) comprises a single dose volume to be stored in an "all-in-one" type disposable capsule (30)/(30')/(30") for instant preparation using liquid solution (50) such as water or similar from conventional coffee-making type electric machine (40), (40'), (40") or other similar appliances; by means of the encapsulated alcoholic drink compound (10), individual doses of any traditional "drinks" (DK) from various regions worldwide or specially developed recipes with alcoholic content are now obtained at any time.

## Description

### TECHNICAL FIELD OF INVENTION

The present invention patent is an alcohol-added drink compound in soluble powder or liquid form, including powdered or liquid ingredients such as coffee, tea, chocolate, artificial flavors/colorants and others; said alcoholic drink compound contains a single dose volume to be stored in an "all-in-one" type disposable capsule for instant preparation using liquid solutions such as water or similar from conventional coffee-maker type electric machine or other appliances; by means of the encapsulated alcoholic drink compound, individual doses of any traditional "drinks" from various regions worldwide or specially developed recipes with alcoholic content are now obtained at any time.

### FUNDAMENTALS OF THE ART

It is well known that alcohol is a psychoactive substance which, with moderate use, brings a series of physical and psycho-social benefits and is an integral part of several "drinks", cocktails and beverage in general such as, Brazilian Grog, Mulled Wine, Irish Coffee, Coffee Cognac, Whiskey Sour, Dry Martini and so many others.

For example, the "drink" named Margarita is a classic Mexican drink that requires for its preparation providing a cocktail shaker in which ingredients are mixed together, such as sugar, orange liqueur, lemon juice and tequila, which is a type of Mexican spirit produced through distillation of Agave from region of Tequila. After arranging the ingredients into the cocktail shaker, one just needs to agitate it to make the mixture.

Accordingly, other types of "drinks" requires the same preparation methods by separating the portions of typical ingredients such as fruit juices, sugar and other types of alcoholic drinks that compose the "drink".

Thus, the fact is that "drink" preparations are restricted to acquisition of several typical ingredients, in addition to aggregate certain costs for purchasing the alcoholic drinks, besides requiring a proper storage space, for example, a bar stand, wine cellar or specific furniture for storing all bottles to prepare "drinks".

Certainly, the acquisition of various types of alcoholic beverage and other ingredients for preparing the "drinks" clearly limits the number of consumers, and reduces the versatility of "drink" preparations as well, leading many people to decide not consuming this kind of beverage due to the simple fact that they not have all the ingredients and also the time available to prepare the "drink".

Other inconvenience of the background state of the art consists in the fact that many people just prepare "drinks" in certain occasions or events, such as parties, celebrations and other situations, and this is because such kind of beverage requires purchasing various ingredients, depriving a person that desires to consume a specific "drink" from readily preparing it or needing he/she to resort to bars, restaurants or specific places, such as "Pubs" and other places.

Following the same line, some solid compounds for preparing "drinks" are already known, such as the traditional Brazilian *"capirinha".* An example consists of a preparation containing sugar, dehydrated lemon pulp, maltodextrin, natural lemon flavor, stabilizer, antioxidant and natural colorants stored in specific envelope, that is, formed with protective layers and sealed, able to store a certain quantity of powder solution that, after opened, must be added to one or two doses of sugarcane spirit (*cachaça*)*.* Even though this is a powder solution, there is a need to dissolve it in alcoholic drink, which people not always have at hand.

### STATE OF THE ART SOLID PREPARATIONS FOR DRINKS

It is widely known the diversity of solid compounds for quick preparation of general beverage. From water soluble powder juices, soluble coffee also dissolved in water or milk up to capsule coffee to be extracted by means of electrical appliances for obtaining the famous "espresso coffee", such as Nespresso® brand machines and others.

More recently, it is possible to obtain carbonated or non-carbonated beverage such as juices, iced drinks *(frappé)* and also soft drinks (soda) stored in capsules to be prepared using a specific machine, for example, "B.Blend®" from a partnership between Whirlpool® and Ambev® or by using "K-Cup®" brand from Keurig® that makes individual preparation capsules of hot and cold coffee, tea, cocoa and milk drink, lemonade, cider and fruit-based beverage.

The capsule beverage market has been increasingly growing year after year and there is already a substantial variety of machine and capsule models containing approximately from 7 to 10 g of powder. Those capsules are made of plastic or aluminum material and contain portions of coffee or other products such as tea and powder milk for preparing in a range of electric machine models. However, a common knowledge is that such capsules are limited to non-alcoholic beverages.

Brief research reports indicated that since 1970 decade, with invention of the technology that enabled obtaining alcohol powder, as described in the patent no. US3786159 (Shokuhin Kogyo, Sato), it is already possible to use powdered alcohol to prepare food, medications, pastries or similar products. This document, already in public domain, demonstrates an alcohol, water and a water-soluble product solution, and such water-soluble product is present in a volume higher than 70% of water weight and 100% above alcohol weight. The solution is dried by pulverization at the lowest possible temperature to obtain a powder product in which the water is substantially removed and the alcohol is encapsulated in a water-soluble product envelope.

Although the said powdered alcohol facilitates the logistics by reducing of storage space and brings convenience to transportation, it requires other ingredients for flavoring the desired drink, as well as specific envelopes for preserving its properties.

### STATE OF THE ART ANALYSIS

A research conducted in specialized databases found documents regarding solid formulas with alcohol for instantaneous preparation, mainly housed in disposable capsule, object of this application. For example, the document no. DE102010006509 (REBEKKA) concerns a capsule with two tight chambers, namely the first to powder substances and a second to liquid fluid, such as alcohol. Certain spacing is provided between the powder chamber outer wall and the liquid chamber wall. A sealing film is applied at capsule inlet, enclosing the chambers and maintaining them sealed and tight. A method to prepare drinks using the two-chamber capsule uses a special electric machine having two units of perforation/opening and vehicle substance inlet (water or other medium) for drink preparation. As observed, the solution provided in this document requires a capsule different from the conventional marketed ones for liquid alcohol storage in a separated compartment apart from the powder compartment, therefore, these capsules are used in a single electric appliance especially designed for double perforation.

Other document no. DE19500919 (KRUEGER GmbH) refers to an instantaneous alcoholic drink mix, a process for its production and use, in which the instantaneous alcoholic drink contains an alcohol component that is adsorbed in non-volatile products included in the instantaneous beverage mixture. In this case, the document not defines the final presentation of the product, that is, if it is supplied in pods, capsules or tablets, however, such document reveals the use of alcohol powder and its addition in mixtures for producing "drinks" and other consumables.

Thus, the documents mentioned in the above paragraphs, refer only as the state of the art and, therefore, do not provide prior art characteristics regarding the object now improved, thus ensuring that such object meets the legal patentability requirements.

### OBJECTIVES OF THE INVENTION

The main objective of the concerned invention consists of disclosing the alcoholic drink compound housed in disposable capsule for instant preparation by means of conventional electric appliances, such as a range of electric coffee makers, thus enabling to obtain encapsulated "all-in-one drinks", containing alcohol and other remaining ingredients.

According to the main objective of the present invention, each capsule of the present invention may contain at minimum 1 ml or 1 g of alcoholic ingredient and other flavoring ingredients in powder, liquid, pasty syrup or other forms, and the said capsules may be configured in the conventional models as Nespresso^{®}, B-blend^{®} and K Cups^{®}, not limited to those models, and possibly made of plastic, aluminum or other proper material to be used for this purpose.

Additionally, other purpose of the invention is providing that the encapsulated alcoholic drink compound comprises flavored mixtures containing distilled or fermented alcohol in powder or other liquid form.

Another purpose of this invention is that the encapsulated alcoholic drink compound presents a final result, after extraction in conventional electric machines or other energy source-powered machines, in form of typical "drink" from the most variety of worldwide regions, such as Brazilian Grog, Mulled Wine, Irish Coffee, Coffee Cognac, Whiskey Sour, Dry Martini among other especially developed recipes containing alcohol.

The natural result of the innovation lies on the fact that enthusiasts or appreciative audience of diversified "drinks" from the widest variety of regions can enjoy various kinds of "drinks" even in their own homes, just purchasing the capsules containing the desired alcoholic drink compound and a conventional extraction machine.

Yet another advantage is that the encapsulated alcoholic drink compound for instant preparation may be stored in several types of capsules, thus enabling use in all types of electrical or other energy-powered appliances.

### DESCRIPTION OF THE DRAWINGS

In order to further support the present description, aiming to provide an improved understanding of the present invention characteristics and according to a preferred practical implementation of it, attached hereto there is a set of drawings where in an illustrative, yet not limiting manner, represented how it works:

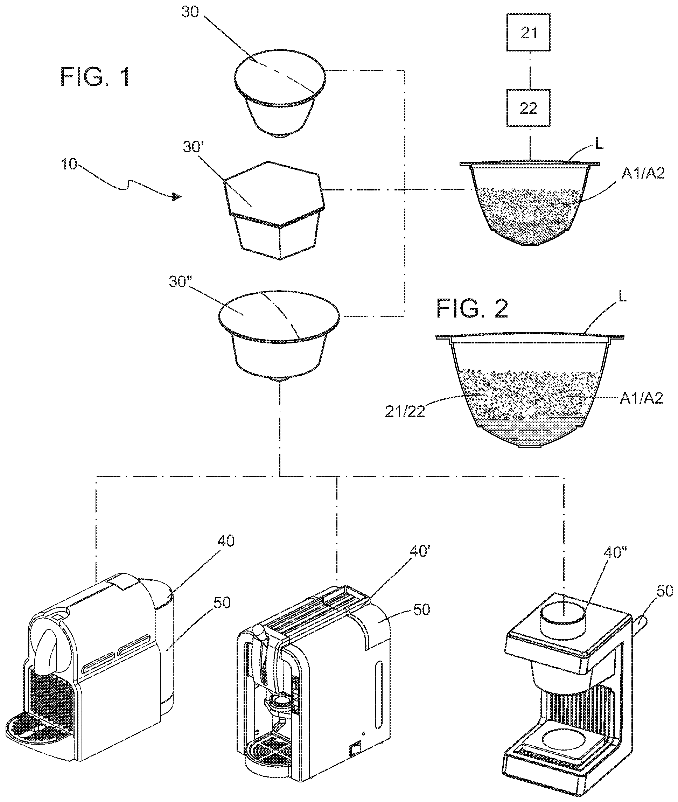

Figure 1 represents a schematic view of capsule types and various types of electric machines for instantaneous drink preparation.
Figure 2 schematically represents a conventional capsule filled with an alcoholic drink compound, illustrating various types of alcohols and their respective flavorings for obtaining the most diversified types of "drinks"; and

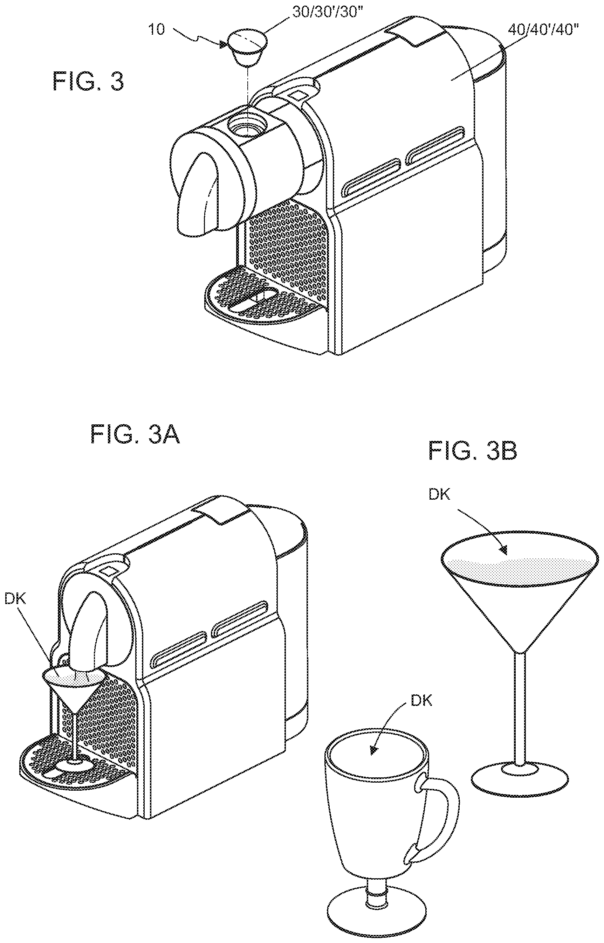

Figures 3, 3A and 3B show perspective views of the capsule with the alcoholic drink compound being applied in an conventional electric apparatus and, more specifically, Figure 3B illustrates two models of glasses with widely-known "drinks", obtained using the present invention, that is, by means of instantaneous drink compounds housed in capsule and prepared in conventional electric appliance.

### DESCRIPTION OF THE INVENTION

With regard to the illustrated drawings, the present invention refers to "ALCOHOLIC DRINK COMPOUND HOUSED IN DISPOSABLE CAPSULE FOR INSTANT PREPARATION", and more precisely, refers to instantaneous drink (10) for preparing various "drinks" (DK).

According to the present invention, the instantaneous drink compound (10) includes in a single capsule of various models (30), (30'), (30") having one individual dose, a quantity of alcoholic (A1) and non-alcoholic ingredients (A2) in form of soluble powder, liquid, paste, syrup or any nature, in addition to powder, liquid or pasty ingredients such as flavors/colorants (21), acidifiers/emulsifiers and others (22); and the volume of the alcoholic ingredient (A1) being at minimum 1g or 1ml and the other ingredients (A2)/(21)/(22) presenting mixtures with optimal volumes relative to the capacity of the mentioned capsule (30)/(30')/(30"). The instantaneous alcoholic drink compound (10) innovated provides that all the volume remain stored and sealed (L) in the conventional capsule (30), (30'), (30") able to be used in the corresponding conventional coffee maker-type electric machine (40), (40'), (40") or other appliances, thus obtaining traditional "drinks" (DK) from various worldwide regions or recipes, especially developed containing alcohol (A1) in soluble powder, liquid, paste, syrup or other forms.

The alcoholic ingredient (A1) in form of soluble powder, liquid or others may be distilled, such as sugarcane spirit (*cachaça*)*,* vodka, tequila, rum, whiskey, liqueur and gin, or fermented, such as wine and others.

The instantaneous drink compound (10) of present invention can be solubilized when inserting hot or cold water (50) or any other solubilization agent from the conventional electric coffee making machine (40), (40'), (40"), depending on the type of "drink" (DK) to be obtained.

The said capsules (30), (30') and (30") are compatible with all types of electric appliances (40), (40'), (40") and may be made of aluminum, non-biodegradable plastic, synthetic resins, organic packaging, biodegradable and recyclable plastics or any other material type suitable for production of capsules (30), (30') and (30") certified by ABNT/BR in compliance with standard PE-308.01, environmental quality program accredited by INMETRO/BR, and consequently, the capsules (30), (30') and (30") are considered biodegradable and 100% recyclable.

The following exemplifies the proportions for some types of "drinks" (DK) obtained from the instantaneous drink compound (10) housed in conventional single-use capsules (30), (30') e (30"), however, such examples are not restrictive.

### Example 1:

- Brazilian Grog (*Quentão*) - typical Brazilian drink whose ingredient proportions can be described as:
   i) 2-3 ml liquid alcohol (A1) of Sugarcane spirit (*cachaça*) type;
   ii) 0.3-1 g powder solution (A2) of ginger type;
   iii) 0.3-1.5 ml flavoring liquid (21).

### Example 2:

- Irish Coffee - typical Irish drink whose ingredient proportions can be described as:
   i) 3-4 ml liquid alcohol (A1) of Whiskey type;
   ii) 0.1-1 g powder solution (A2) of emulsifier type;
   iii) 0.05-0.1 g powder solution (A2) of colorant type;
   iv) 0.3-1.0 ml flavoring liquid (21);
   ii) 0.5-1.0 g powder solution (A2) of soluble coffee type;

### Example 3:

- Mulled Wine:
   i) 3-4 ml liquid alcohol (A1) of Wine type;
   ii) 0.2-1 g powdered ginger (21);
   iii) 0.05-0.2 g powder or liquid colorant (21);
   iv) 0.3-1.0 ml flavoring agent (liquid) (21).

### Example 4:

- Coffee Cognac:
   i) 3-4 ml liquid alcohol (A1) of Cognac type;
   ii) 0.5-1 g soluble coffee (powder) (A2);
   iii) 0.3-1.0 ml flavoring agent (liquid) (21).

In a preferred embodiment option for producing the instantaneous drink compound (10), aiming to meet the objective of the present invention, the following steps are adopted:
- Step 1 - in an agitation tank, the liquid ingredients, and afterwards the soluble powders are added for the complete homogenization under agitation; the entire process is performed at room temperature.
- Step 2 - Laboratory-scale analyses are conducted for verifying the identity and quality standards of the final product;
- Step 3 - Upon product release, it follows to the filling process;
- Step 4 - Filling machine has a product storage tank equipped with pipes and valves that convey the product to the capsules that will be filled in another compartment; and
- Step 5 - After the filling, the instantaneous sealing is made, then the capsules are transferred in a belt/track conveyor to packaging.

It is certain that when the present invention is put into practice, changes may be applied to reflect certain form and construction details, however, not implying to move away from the fundamental principles that are clearly substantiated in the claim framework, so understood, therefore, that the terminology employed had no limiting purposes.

## Claims

1. **"ALCOHOLIC DRINK COMPOUND HOUSED IN DISPOSABLE CAPSULE FOR INSTANT PREPARATION",** more precisely refers to instantaneous drink (10) for preparing various "drinks" (DK); ***characterized* by** the fact that the instantaneous drink compound (10) includes in a single capsule of various models (30), (30'), (30") and an individual dose:
- a volume of at minimum 1 g or 1 ml of alcoholic ingredient (A1) in form of soluble powder, liquid, paste, syrup or of any nature;
- non-alcoholic ingredients or ingredient mixtures (A2) in form of soluble powder, liquid, paste, syrup or of any other nature and volume of
- of ingredients such as flavoring agents/colorants (21), acidifiers/emulsifiers or others (22) in powder, liquid or paste, where the volumes of these ingredients (A2)/(21)/(22) are optimized in relation to capacity of the said capsule (30)/(30')/(30") added with the volume of the alcoholic ingredient (A1);
- the instantaneous alcoholic drink compound (10) remain stored and sealed (L) in conventional capsule (30), (30'), (30") able to be used in corresponding coffee-making type electric machine (40), (40'), (40") or others, obtaining traditional "drinks" (DK) from various regions worldwide or proper recipes containing alcohol (A1) in soluble powder, liquid, pasty or syrup or other form.

2. **"ALCOHOLIC DRINK COMPOUND HOUSED IN DISPOSABLE CAPSULE FOR INSTANT PREPARATION",** according to claim 1, ***characterized* by** the fact that the said instantaneous drink compound (10) stored in conventional capsule (30), (30'), (30") is soluble in liquid (50) such as water or other proper medium from conventional coffee-making typo electric machine (40), (40'), (40") or other similar ones.

3. **"ALCOHOLIC DRINK COMPOUND HOUSED IN DISPOSABLE CAPSULE FOR INSTANT PREPARATION",** according to claims 1 and 2, ***characterized* by** the fact that the individual dose of "drink" (DK) contains alcohol (A1) in powder, liquid, paste, syrup or other form.

4. **"ALCOHOLIC DRINK COMPOUND HOUSED IN DISPOSABLE CAPSULE FOR INSTANT PREPARATION",** according to claims 1 and 3, ***characterized* by** the fact that the individual dose of "drink" (DK) containing alcohol (A1) is obtained in conventional coffee-making typo-electric machine (40), (40'), (40") or other similar ones.

5. **"ALCOHOLIC DRINK COMPOUND HOUSED IN DISPOSABLE CAPSULE FOR INSTANT PREPARATION",** according to claim 1, ***characterized* by** the fact that the soluble powder (A2) ingredients are coffee, tea, chocolate or other products obtained by lyophilization or similar method.

6. **"ALCOHOLIC DRINK COMPOUND HOUSED IN DISPOSABLE CAPSULE FOR INSTANT PREPARATION",** according to claim 1, ***characterized* by** the alcohol (A1) in soluble powder, liquid, paste or syrup or others can be of distilled type, such as sugarcane spirit, vodka, tequila, rum, whiskey, liqueur, gin or other, or fermented type, such as wine or other.
